# EUROPÄISCHE PATENTANMELDUNG

(11) **EP 0 887 254 A2**
(43) Veröffentlichungstag der Anmeldung: **30.12.1998**
(21) Anmeldenummer: 98111437.4
(22) Anmeldetag: 22.06.1998
(51) Int. Cl.: B62L 5/00

(54) **Bremsbetätigungseinrichtung für ein muskelkraftbetriebenes Fahrzeug**

(30) Priorität: 28.11.1997 DE 19752869; 25.06.1997 DE 19727052
(71) Anmelder: Op den Camp, Eckart, 56073 Koblenz (DE)
(72) Erfinder: Op den Camp, Eckart, 56073 Koblenz (DE)
(74) Vertreter: Goetz, Rupert, Dipl.-Ing.

(57) **Zusammenfassung**

In einem Lagergehäuse (12) ist eine Kurbelwelle (13) zum Antreiben eines Rades (11) gelagert und ein Freilaufelement (36) angeordnet, das mit der Kurbelwelle (13) einen bei Rückwärtsdrehen sperrenden Freilauf bildet. Innerhalb des Lagergehäuses (12) ist ferner ein hydraulischer Hauptzylinder (48) mit einem Hauptkolben (40) angeordnet, der durch Rückwärtsdrehen des Freilaufelements (36) betätigbar ist. An den Hauptzylinder (48) ist mindestens ein Radbremszylinder (50) angeschlossen. Im Lagergehäuse (12) ist außerdem eine zum Befestigen eines Kettenrades (15) ausgebildete Nabe (27) in bezug auf die Kurbelwelle (13) rückwärts drehbar gelagert. Die Kurbelwelle (13) ist mit der Nabe (27) durch ein beim Vorwärtsdrehen sperrendes Richtungsgesperre (31,32,33,34) verbunden. Der Hauptkolben (40) weist eine Steuerfläche (41') auf, die beim Betätigen des Hauptkolbens (40) das Richtungsgesperre (31,32,33,34) selbsttätig ausrückt. Durch diese Anordnung wird das Lösen blockierter Bremsen erleichtert.

## Beschreibung

Die Erfindung betrifft eine Bremsbetätigungseinrichtung für ein muskelkraftbetriebenes Fahrzeug mit einem Lagergehäuse, in dem eine Kurbelwelle zum Antreiben eines Rades gelagert ist, einem Freilaufelement, das im Lagergehäuse angeordnet ist und mit der Kurbelwelle einen bei Rückwärtsdrehen sperrenden Freilauf bildet, einem hydraulischen Hauptzylinder, der innerhalb des Lagergehäuses angeordnet ist, mit einem Hauptkolben, der durch Rückwärtsdrehen des Freilaufelements betätigbar ist, und mindestens einem Radbremszylinder, der an den Hauptzylinder angeschlossen ist.

Fahrräder mit Kettenschaltung sind üblicherweise am Vorder- und am Hinterrad mit Felgenbremsen ausgestattet, die über je einen Bowdenzug von je einem am Lenker angeordneten Bremshebel betätigt werden. Herkömmliche, in eine Hinterradnabe eingebaute Rücktrittbremsen lassen sich über eine schaltbare Antriebskette bekanntermaßen nicht in befriedigender Weise betätigen. Andererseits ist es auch unbefriedigend, wenn die Bremsen vorne und hinten ausschließlich von Hand zu betätigen sind, da viele Benutzer von Fahrrädern Rücktrittbremsen gewohnt sind, und da es vor allem bei längeren Bergabfahrten mühsam und sogar gefährlich sein kann, wenn der Fahrer mit beiden Händen je einen Bremshebel betätigen muß anstatt ausschließlich je einen Handgriff am Lenker festzuhalten.

Es sind deshalb zahlreiche Bremseinrichtungen für Fahrräder vorgeschlagen worden, die sich durch Zurücktreten eines Pedals auf anderem Wege als über die Antriebskette betätigen lassen. Solche Vorschläge sind beispielsweise aus DE 36 11 490 A1, DE 39 04 786 A1, DE 39 32 870 A1, DE 42 13 427 A1, DE 43 39 273 A1, DE 196 24 464 A1, DE 94 19 360 U1 und AT 196 261 bekannt.

All diesen Vorschlägen ist gemeinsam, daß im Tretlagergehäuse ein bei Rückwärtsdrehen der Tretkurbelwelle sperrendes Freilaufelement angeordnet ist, das über einen Bowdenzug, ein Gestänge oder auch hydraulisch mit einer Hinterradbremse und gegebenenfalls zusätzlich mit einer Vorderradbremse verbunden ist. Insbesondere ist aus AT 196 261 eine hydraulische Bremseinrichtung der eingangs beschriebenen Gattung bekannt, deren Hauptzylinder und Hauptkolben ringförmig gestaltet und gleichachsig mit der Kurbelwelle im Lagergehäuse angeordnet sind. Das Freilaufelement weist eine als Axialkurve ausgebildete Stirnfläche auf. Der Hauptkolben weist eine als komplementäre Axialkurve ausgebildete ringförmige Stirnfläche auf, ist gegen Drehen gesichert und von einer Rückstellfeder im Sinne eines gegenseitigen Anliegens der beiden Axialkurven vorgespannt. Wenn ein mit dieser Bremseinrichtung ausgestattes Fahrrad bis zum Blockieren abgebremst wird, kann es mühsam sein, die Bremse wieder zu lösen.

Der Erfindung liegt die Aufgabe zugrunde, eine hydraulische Bremsbetätigungseinrichtung für ein muskelkraftbetriebenes Fahrzeug benutzerfreundlicher zu gestalten. Damit soll auch erreicht werden, daß eine solche Bremsbetätigungseinrichtung sich in ein bei muskelkraftbetriebenen Fahrzeugen übliches Lagergehäuse, insbesondere Tretlagergehäuse eines Fahrrads, auf einfache Weise einbauen läßt.

Die Aufgabe ist erfindungsgemäß ausgehend von einer Bremseinrichtung der eingangs beschriebenen Gattung dadurch gelöst, daß im Lagergehäuse eine zum Befestigen eines Kettenrades ausgebildete Nabe in bezug auf die Kurbelwelle rückwärts drehbar gelagert ist, die Kurbelwelle mit der Nabe durch ein beim Vorwärtsdrehen sperrendes Richtungsgesperre verbunden ist, und der Hauptkolben eine Steuerfläche aufweist, die beim Betätigen des Hauptkolbens das Richtungsgesperre selbsttätig ausrückt. Dadurch wird das Lösen blockierter Bremsen erleichtert. Dies ist vor allem bei bestimmten Fahrtechniken vorteilhaft, die bei Mountainbikes angewandt und durch bewußtes Blockieren des Hinterrades eingeleitet werden.

Unter muskelkraftbetriebenen Fahrzeugen im Sinne der Erfindung sollen in erster Linie Fahrräder, besonders Mountainbikes und Treckingräder verstanden werden, aber auch beispielsweise Dreiräder, insbesondere für Erwachsene, Fahrradrikschas und andere Tretfahrzeuge. Die Erfindung ist auch auf handkurbelbetätigte Fahrzeuge anwendbar, wie sie von gehbehinderten Personen benutzt werden; bei solchen Fahrzeugen ist es besonders wichtig, daß der Benutzer über die zum Antreiben verwendeten Handkurbeln mit mäßigem Kraftaufwand auch Bremsungen zuverlässig einleiten kann. Mit Blick auf solche Fahrzeuge werden auf Fahrräder üblicherweise angewandte Bezeichnungen, wie "Tretlagergehäuse" und "Tretkurbelwelle" hier durch "Lagergehäuse" bzw. "Kurbelwelle" ersetzt.

Vorzugsweise sind der Hauptzylinder und der Hauptkolben ringförmig gestaltet und gleichachsig mit der Kurbelwelle im Lagergehäuse angeordnet. Diese - als solche aus AT 196 261 bekannte - Maßnahme ergibt eine besonders raumsparende Bauweise.

Dabei ist es zweckmäßig, wenn das Freilaufelement eine als Axialkurve ausgebildete ringförmige Stirnfläche aufweist und der Hauptkolben eine als komplementäre Axialkurve ausgebildete ringförmige Stirnfläche aufweist, gegen Drehen gesichert und von einer Rückstellfeder im Sinne eines gegenseitigen Anliegens der beiden Axialkurven vorgespannt ist. Das unmittelbare Zusammenwirken des Freilaufelements und des Hauptkolbens trägt weiter zu einer kompakten Bauweise bei. Auch dies ist ansich - ohne die kennzeichnenden Merkmale des Anspruchs 1 - aus AT 196 261 bekannt.

Zweckmäßigerweise ist gleichachsig mit dem Hauptzylinder eine an einen Bremsflüssigkeitsbehälter angeschlossene Nachlaufkammer ebenfalls innerhalb des Lagergehäuses angeordnet. Über die Nachlaufkammer ergänzt sich die zum Betrieb der Bremseinrichtung erforderliche Bremsflüssigkeit jeweils dann aus dem Bremsflüssigkeitsbehälter, wenn der Hauptkolben seine Ruhestellung einnimmt oder ihr nahe ist.

Es ist ferner zweckmäßig, wenn ein Druckhalteventil an den Hauptzylinder angeschlossen ist, das willkürlich betätigbar ist, um einen Bremsdruck in mindestens einem angeschlossenen Radbremszylinder nach Entlastung des Hauptzylinders aufrechtzuerhalten. Der Fahrer eines Fahrzeugs, das mit einer erfindungsgemäßen Bremseinrichtung ausgerüstet ist, braucht deshalb zu Beginn einer längeren Bergabfahrt eine Bremsung durch Rückwärtsdrehen der Kurbelwelle nur einzuleiten und währenddessen oder zuvor das Druckhalteventil in eine aktive Stellung zu bringen. Das Druckhalteventil sorgt dann dafür, daß der zum Fortsetzen der Bremsung erforderliche Druck solange aufrechterhalten wird, bis das Druckhalteventil vom Fahrer in eine inaktive Stellung gebracht wird, in der Bremsflüssigkeit in den Hauptzylinder zurückströmen kann. Erweist es sich während der Bergabfahrt als erforderlich, die Bremsung zu verstärken, so kann dies ohne Rücksicht auf das Druckhalteventil jederzeit in der üblichen Weise geschehen, bei einem Fahrrad also durch Rücktreten eines Pedals. Der dadurch im Hauptzylinder erhöhte Druck gelangt über das insoweit als Einwegventil wirkende Druckhalteventil zu dem bzw. jedem angeschlossenen Radbremszylinder.

Alternativ oder zusätzlich kann eine Dämpfungskammer an den Hauptzylinder angeschlossen sein, die durch einen vorgespannten Kolben belastet ist. Die Dämpfungskammer schützt die gesamte Bremseinrichtung vor Überlastung, die ohne diesen Schutz beispielsweise entstehen könnte, wenn ein auf den Pedalen seines Mountainbike stehender Fahrer eine Mulde durchfährt und dabei das rückwärtsgerichtete Pedal mit einer Trägheitskraft belastet, die ein Mehrfaches seines Körpergewichts betragen kann.

Ebenfalls alternativ oder zusätzlich kann ein Vordruckventil an den Hauptzylinder angeschlossen sein, das bei dessen Druckloswerden einen Restdruck in der übrigen Bremseinrichtung aufrechterhält. Mit einem solchen Restdruck lassen sich Reibungswiderstände in der Bremseinrichtung nahezu im Gleichgewicht halten, so daß eine geringe Drucksteigerung genügt, um diese Reibungswiderstände ganz zu überwinden und eine Bremsung einzuleiten.

Ferner kann - wiederum alternativ oder zusätzlich - ein Bremskraftregelventil an den Hauptzylinder angeschlossen sein, das so einstellbar ist, daß der Hauptzylinderdruck in einem Radbremszylinder voll, in einem anderen Radbremszylinder hingegen nur vermindert wirksam ist. Auf diese Weise läßt sich die bei jeder Bremsung auftretende Gewichtsverlagerung von hinten nach vorne derart kompensieren, daß eine Hinterrad-Überbremsung vermieden wird.

Unabhängig davon kann ein vom Druck im Hauptzylinder betätigbarer elektrischer Bremswarnschalter vorgesehen sein.

Ferner kann ein Bremsflüssigkeitsbehälter vorgesehen sein, der einen Verschluß mit einer faltenbalgartigen Membran aufweist, die einen Magneten enthält und mit einem Reed-Schalter zum Anzeigen eines Nachfüllbedarfs zusammenwirkt.

Weitere Ausgestaltungen der Erfindung sind Gegenstand der Ansprüche 4 bis 12.

Ausführungsbeispiele der Erfindung werden im folgenden anhand schematischer Zeichnungen mit weiteren Einzelheiten erläutert. Es zeigen:
- Fig. 1: eine erste Ausführungsform einer erfindungsgemäßen Bremsbetätigungseinrichtung in einem axialen Schnitt,
- Fig. 2: den achsnormalen Schnitt II-II in Fig.1 in Vortriebsstellung,
- Fig. 3: den selben Schnitt, jedoch in Bremsstellung,
- Fig. 4: den achsnormalen Schnitt IV-IV in Fig.1,
- Fig. 5: einen der Fig.1 entsprechenden Schnitt einer zweiten Ausführungsform einer erfindungsgemäßen Bremsbetätigungseinrichtung,
- Fig. 6: den achsnormalen Schnitt VI-VI in Fig.1,
- Fig. 7: eine Variante zu Fig.6,
- Fig. 8: eine weitere Variante zu Fig.6,
- Fig. 9: die Hauptteile einer weiteren erfindungsgemäßen Bremsbetätigungseinrichtung beim Einbau in das Tretlagergehäuse eines Fahrrades,
- Fig.10: einen gegenüber Fig.9 etwas vergrößerten axialen Schnitt durch die eingebaute Bremsbetätigungseinrichtung,
- Fig.11: den Schnitt XI-XI in Fig.10,
- Fig.12: den Schnitt XII-XII in Fig.10,
- Fig.13: den Schnitt XIII-XIII in Fig.10 in Vortriebsstellung, und
- Fig.14: den selben Schnitt, jedoch in Bremsstellung, und
- Fig.15: den Schnitt XV-XV in Fig.10.

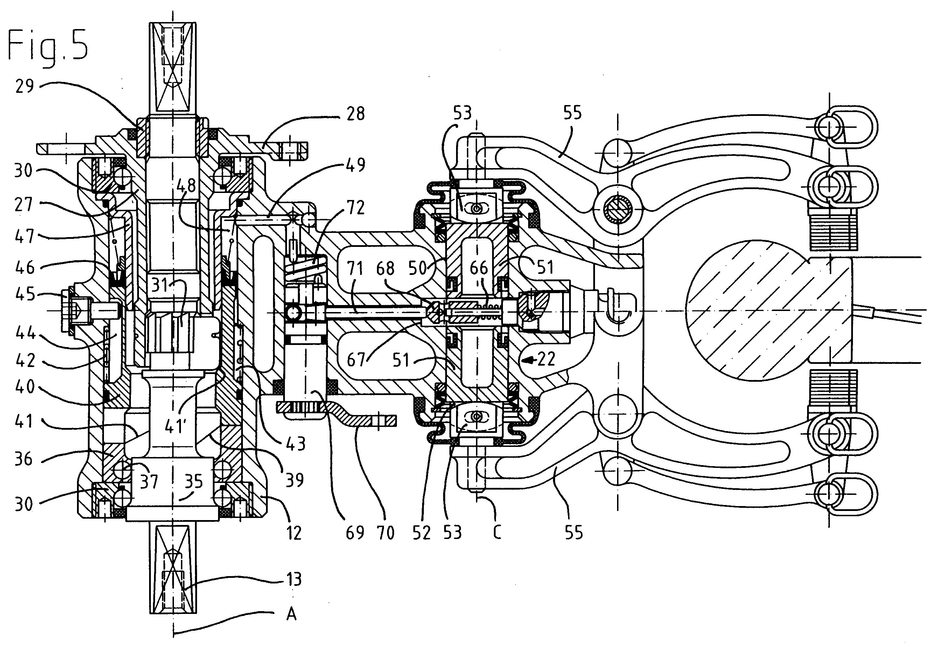

Zu einem üblichen Fahrradrahmen gehört als integraler Bestandteil ein rohrfömiges Tretlagergehäuse, das an den unteren Enden eines Sattelrohrs und eines Unterrohrs angeschweißt oder durch Hartlöten befestigt ist und hier kurz als Lagergehäuse 12 bezeichnet wird. Das Lagergehäuse 12 kann auch, wie in Fig. 5 dargestellt, Bestandteil einer Baugruppe sein, die an einen Fahrradrahmen angeschraubt wird. Durch das Lagergehäuse 12 erstreckt sich wie üblich längs dessen Achse A eine Kurbelwelle 13, die in ihrem bezogen auf die Fahrtrichtung des Fahrrades rechten Bereich in einer rohrförmigen Nabe 27 gelagert ist. Die Nabe 27 hat einen Flansch 28 zum Befestigen eines Kettenrades oder eines Satzes Kettenräder, ist durch eine auf die Kurbelwelle 13 aufgeschraubte Einstellmutter 29 gegen axiales Abziehen gesichert und in einem in das Lagergehäuse 12 eingeschraubten Kugellagerring 30 gelagert. In das vom Flansch 28 abgewandte Ende des Lagergehäuses 12 ist ein weiterer, gleicher Kugellagerring 30 eingeschraubt, in dem die Kurbelwelle 13 unmittelbar gelagert ist.

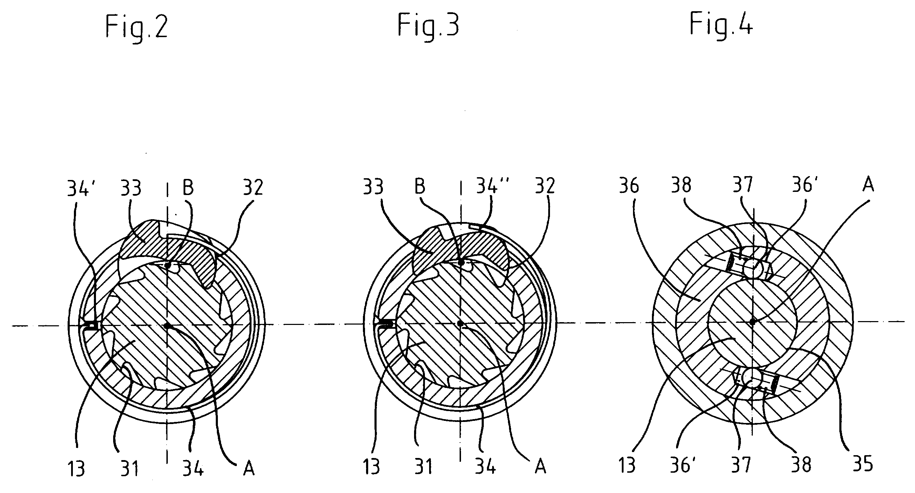

In ihrem von der Nabe 27 umschlossenen Bereich ist an der Kurbelwelle 13 eine Verzahnung 31 mit Sägezahnprofil ausgebildet, und in diesem Bereich weist die Nabe 27 eine im Querschnitt gemäß Fig.2 und 3 kreisförmige Aussparung 32 auf, in der eine Klinke 33 um eine Achse B schwenkbar gelagert ist. Die Achse B ist eine durch die kreisbogenförmige Begrenzung der Aussparung 32 definierte virtuelle Achse, die sich parallel zur gemeinsamen Achse A des Lagergehäuses 12, der Kurbelwelle 13 und der Nabe 27 erstreckt. Die Nabe 27 hat ferner eine äußere Ringnut 33', die sich in einer zu den Achsen A und B normalen Ebene durch die Aussparung 32 erstreckt, durch diese also unterbrochen ist. In der Ringnut 33' liegt eine entsprechend ringförmig gebogene Feder 34 aus Draht, die mit einem radialen Ende 34' in der Nabe 27 eingespannt ist und mit ihrem entgegengesetzten Ende 34'' derart gegen die Klinke 33 drückt, daß diese normalerweise gemäß Fig.2 in die Verzahnung 31 der Kurbelwelle 13 eingreift. Infolgedessen nimmt die Kurbelwelle 13, wenn sie vorwärtsgedreht wird, die Nabe 27 mit, so daß das Kettenrad angetrieben wird.

Außerhalb der Nabe 27, jedoch noch innerhalb des Lagergehäuses 12, hat die Kurbelwelle 13 einen kreiszylindrischen Bereich 35 von verhältnismäßig großem Durchmesser, der von einem ringförmigen Freilaufelement 36 umschlossen ist. Dieses ist im Lagergehäuse 12 drehbar gelagert und weist zwei Bohrungen 36' auf, die einander diametral gegenüberliegend schräg zum kreiszylindrischen Bereich 35 der Kurbelwelle 13 angeordnet sind und je einen Sperrkörper 37 sowie je eine Feder 38 enthalten. Die Sperrkörper 37, im dargestellten Beispiel Kugeln, sind in ihrer Bohrung 36' so geführt und von der zugehörigen Feder 38 derart vorgespannt, daß sie bei stillstehendem Freilaufelement 36 eine unbehinderte Vorwärtsdrehung der Kurbelwelle 13 zulassen, daß aber das Freilaufelement 36 an jeglicher Rückwärtsdrehung der Kurbelwelle 13 teilnimmt. An der in bezug auf das Lagergehäuse 12 inneren Stirnseite des Freilaufelements 36 ist eine ringförmige Axialkurve 39 ausgebildet, beispielsweise in Form dreier einander diametral gegenüber angeordneter Rampen, an die sich je eine radiale Flanke anschließt.

Axial neben dem Freilaufelement 36 ist innerhalb des Lagergehäuses 12 ein ebenfalls ringförmiger Hauptkolben 40 geführt, der an seiner dem Freilaufelement 36 zugewandten Stirnseite eine zu dessen Axialkurve 39 komplementäre Axialkurve 41 aufweist und axial derart vorgespannt ist, daß die beiden Axialkurven 39 und 41 ständig aneinanderliegen. Die Vorspannung wird von einer Rückstellfeder 42 erzeugt, die in einer im Lagergehäuse 12 ausgebildeten ringfömigen Nachlaufkammer 43 angeordnet und am Lagergehäuse axial abgestützt ist. Der Hauptkolben 40 weist eine achsparallele äußere Nut 44 auf, in die ein in das Lagergehäuse 12 radial eingeschraubter Stift 45 eingreift, so daß der Hauptkolben gegen Drehen gesichert ist.

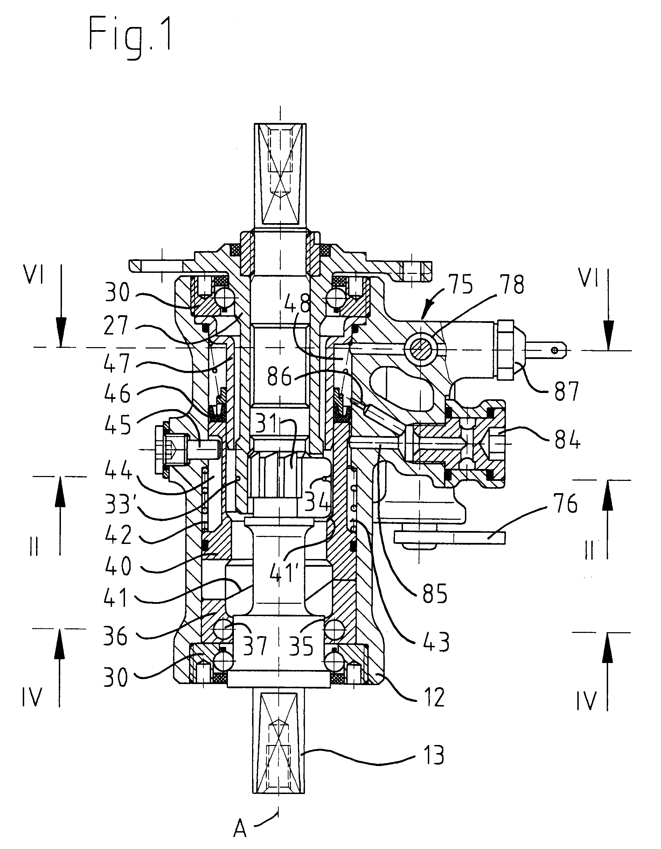

In seinem Inneren weist der Hauptkolben 40 eine konische Steuerfläche 41' auf, die bei einer durch Rückwärtsdrehen des Freilaufelements 36 bewirkten Axialverschiebung des Hauptkolbens gegen einen radial äußeren Rand der Klinke 33 drückt, diese aus der Verzahnung 31 ausrückt und sie solange ausgerückt hält, bis durch Vorwärtdrehen der Kurbelwelle 13 das Freilaufelement 36 den Hauptkolben 40 in seine Ruhestellung gemäß Fig.1, 6 und 7 zurückfahren läßt.

An seinem von der Axialkurve 39 abgewandten Ende trägt der Hauptkolben 40 eine Lippendichtung 46, die einerseits gegen einen zylindrischen Innenwandabschnitt des Lagergehäuses 12 und andererseits gegen einen zylindrischen Außenwandabschnitt eines hülsenförmigen Einsatzes 47 abdichtet und somit den Druckraum eines ringförmigen Hauptzylinders 48 begrenzt.

Der Hauptzylinder 48 kann gemäß Fig.5 durch einen Kanal 49 mit einem Radbremszylinder 50 verbunden sein, der mit dem Lagergehäuse 12 eine Baugruppe bildet, und dessen Achse C parallel zur Achse A des Lagergehäuses 12 angeordnet ist. Im Radbremszylinder 50 sind zwei gegenläufig verschiebbare Radbremskolben 51 angeordnet, die je einen aus dem Radbremszylinder herausragenden gabelförmigen Ansatz 52 aufweisen. Auf den Ansätzen 52 ist ein abgeflachter Teil je eines Zapfens 53 um je eine zur Bremszylinderachse C normale Schwenkachse schwenkbar gelagert. Die Zapfen 53 stecken in einem Ende je eines zweiarmigen Zangenhebels 55 einer Zangenbremse, die in ihrem mechanischen Teil von üblicher Bauart und deshalb in Fig.5 nur andeutungsweise dargestellt ist.

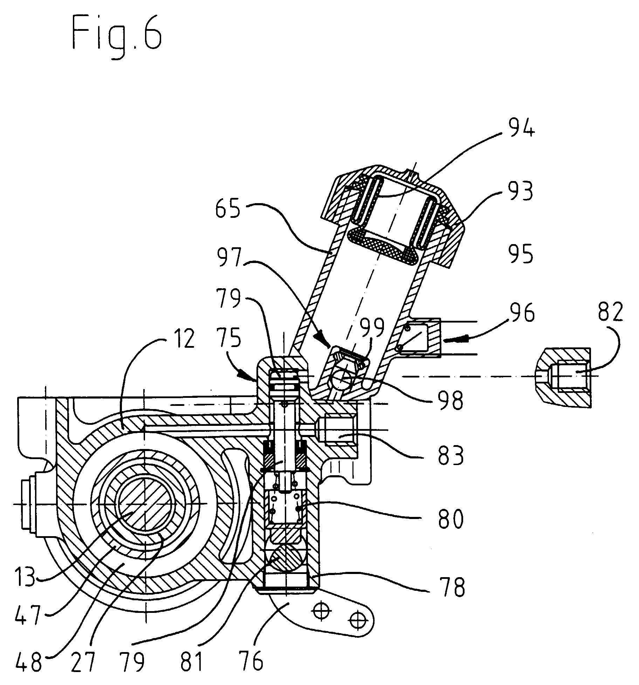

Die Nachlaufkammer 43 ist ständig mit einem Bremsflüssigkeitsbehälter 65 verbunden, der gemäß Fig.6 auf das Lagergehäuse 12 oder gemäß Fig.5 auf die vom Lagergehäuse 12 und vom Radbremszylinder 50 gebildete Baugruppe aufgesetzt sein kann, wenn nur eine Hinterradbremse hydraulisch zu betätigen ist. Wenn jedoch auch eine Vorderradbremse in die hydraulische Bremseinrichtung einbezogen ist, dann wird der Bremsflüssigkeitsbehälter 65 höher angeordnet, beispielsweise am oberen Ende des Sattelrohrs.

Am Lagergehäuse 12 bzw. an der von diesem und dem Radbremszylinder 50 gebildeten Baugruppe ist gemäß Fig.5 ein Druckhalteventil 66 ausgebildet, das einen Ventilsitz 67 und einen gegen diesen hin vorgespannten Ventilstößel 68 aufweist. Am Lagergehäuse 12 ist parallel zur Kurbelwelle 13 eine Nockenwelle 69 gelagert, die über einen an ihr befestigten Hebel 70 und einen nicht dargestellten Bowdenzug od.dgl. beispielsweise von einem Fahrradlenker aus betätigbar ist. Zwischen der Nockenwelle 69 und dem Ventilstößel 68 ist ein Stift 71 angeordnet, der in der Stellung gemäß Fig.5 den Ventilstößel 68 in einer vom Ventilsitz 67 abgehobenen Lage hält und dadurch das Druckhalteventil 66 unwirksam macht. Die Nockenwelle 69 ist mit einer Rückstellfeder 72 verbunden, die ebenfalls in die vom Lagergehäuse 12 und Radbremszylinder 50 gebildete Baugruppe eingebaut ist und die Nockenwelle in eine Ruhestellung dreht, sobald der Hebel 70 freigegeben wird. Dabei verdrängt der Ventilstößel 68 den Stift 71 und legt sich an den Ventilsitz 67 an mit der Folge, daß Bremsflüssigkeit nur noch vom Hauptzylinder 48 in den Radbremszylinder 50 strömen kann, nicht umgekehrt.

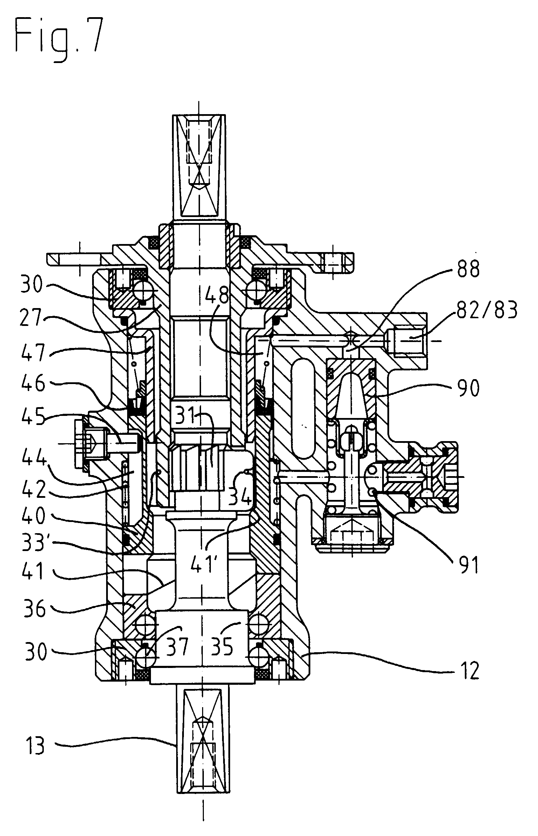

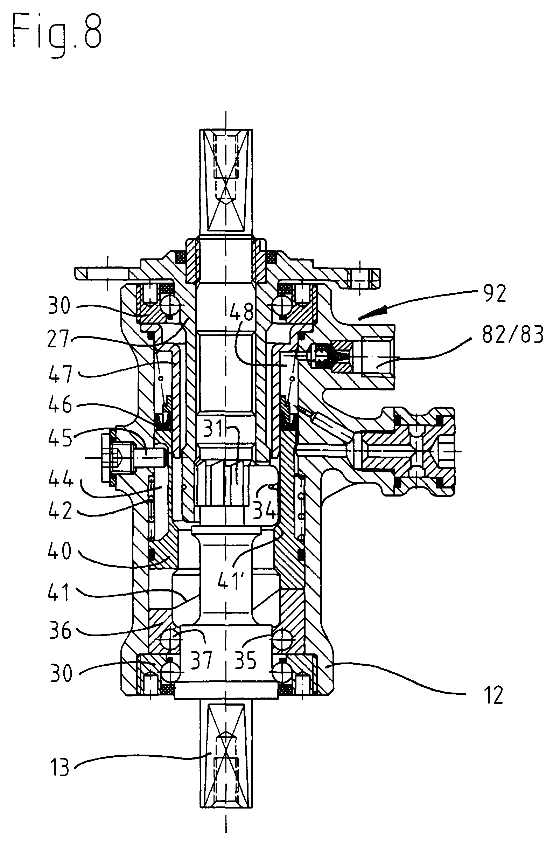

Gemäß Fig.6 kann im Lagergehäuse 12 ein Bremskraftregelventil 75 angeordnet sein, das über einen Stellhebel 76 zu betätigen ist. Zum Bremskraftregelventil 75 gehört ein am Lagergehäuse 12 angeordneter Stellzylinder 78, der einen Stellkolben 79 enthält, und dieser stützt sich über eine Feder 80 an einem Exzenter 81 ab, an dem der Stellhebel 76 befestigt ist. Das Bremskraftregelventil 75 ist gemäß Fig.6 in einem Kanal zwischen dem Hauptzylinder 48 und einem am Lagergehäuse 12 angeordneten Anschluß 82 (Fig.7 und 8) für eine zum Radbremszylinder 50 führende flexible Leitung angeordnet. Für eine ebenfalls hydraulische Vorderradbremse ist am Lagergehäuse ein weiterer Anschluß 83 ausgebildet, der vom Bremskraftregelventil 75 unbeeinflußt ständig mit dem Hauptzylinder 48 verbunden ist. Damit wird erreicht, daß die Hinterradbremse nur bei ausreichender Belastung des Hinterrades den vollen im Hauptzylinder 48 erzeugten Bremsdruck erhält; bei dynamischer Radlastverlagerung nach vorne wird der Druck zur Betätigung der Hinterradbremse hingegen im Vergleich zum Druck für die Vorderradbremse reduziert.

In Fig.1 ist ferner eine Banjoverschraubung 84 dargestellt, durch die der Bremsflüssigkeitsbehälter 65 (Fig.6) unmittelbar oder mittelbar an das Lagergehäuse 12 angeschlossen ist. Von der Banjoschraube 84 führt ein Kanal 85 zur Nachlaufkammer 43; zusätzlich führt, wie angedeutet, eine Schnüffelbohrung 86 direkt in den Hauptzylinder 48. An den Hauptzylinder 48 kann, wie ebenfalls in Fig.1 angedeutet ist, ein am Lagergehäuse 12 angeordneter elektrischer Bremswarnschalter 87 angeschlossen sein.

In Fig.7 ist eine Dämpfungskammer 88 dargestellt, die in das Lagergehäuse 12 parallel zum Hauptzylinder 48 eingearbeitet, mit diesem ständig verbunden und durch einen Dämpfungskolben 90 begrenzt ist. Der Dämpfungskolben 90 ist von einer vorgespannten Dämpfungsfeder 91 normalerweise in der aus Fig.7 ersichtlichen Stellung gehalten. Falls im Hauptzylinder 48 ein übermäßiger Druck entsteht, weicht der Dämpfungskolben 90 gegen die Kraft der Dämpfungsfeder 91 zurück; die damit verbundene Volumenvergrößerung der Dämpfungskammer 88 bewirkt einen Abbau der hydraulischen Druckspitze.

Alternativ oder zusätzlich kann gemäß Fig.8 zwischen dem Hauptzylinder 48 und dem am Lagergehäuse 12 ausgebildeten Anschluß 82 für die Hinterradbremse - oder für Vorder- und Hinterradbremse gemeinsam - ein Vordruckventil 92 angeordnet sein, das nach jeder hydraulischen Bremsbetätigung einen Restdruck im Radbremszylinder 50 der Hinterradbremse und ggf. in einem entsprechenden Radbremszylinder der Vorderradbremse aufrechterhält.

Der Bremsflüssigkeitsbehälter 65 (Fig.6) hat einen beispielsweise aufgeschraubten Verschluß 93 mit eingebauter faltenbalgartiger Membran 94, die einen mittleren Bereich mit einvulkanisiertem oder angeklebtem Magneten 95 aufweist. Dieser mittlere Bereich der Membran 94 nimmt jeweils eine Stellung ein, die dem Stand der Bremsflüssigkeit entspricht. In einer Höhe, die dem niedrigsten zulässigen Flüssigkeitsstand entspricht, ist am Bremsflüssigkeitsbehälter 65 ein Reed-Schalter 96 angeordnet, der vom Magneten 95 betätigt wird, wenn die Bremsflüssigkeit auf diesen Stand abgesunken ist. Über den Reed-Schalter 96 wird dann ein nicht dargestellter Signalgeber, beispielsweise eine Warnleuchte, betätigt. Am Boden des Bremsflüssigkeitsbehälters 95 ist ein Rückhalteventil 97 angeordnet, das in normaler, aufrechter oder leicht geneigter Stellung des Fahrrades ständig geöffnet ist. Das Rückhalteventil 97 weist einen kugelförmigen Ventilkörper 98 und einen in normaler Stellung oberhalb davon angeordneten kegelförmigen Ventilsitz 99 auf. Wird das Fahrrad, z.B. für eine Reparatur, auf den Kopf gestellt, so legt sich der Ventilkörper 98 gegen den Ventilsitz 99 und verhindert, daß Bremsflüssigkeit aus den normalerweise unterhalb des Bremsflüssigkeitsbehälters 65 angeordneten Teilen der Bremseinrichtung in den Bremsflüssigkeitsbehälter 95 abfließt und an ihrer Stelle Luft eindringt.

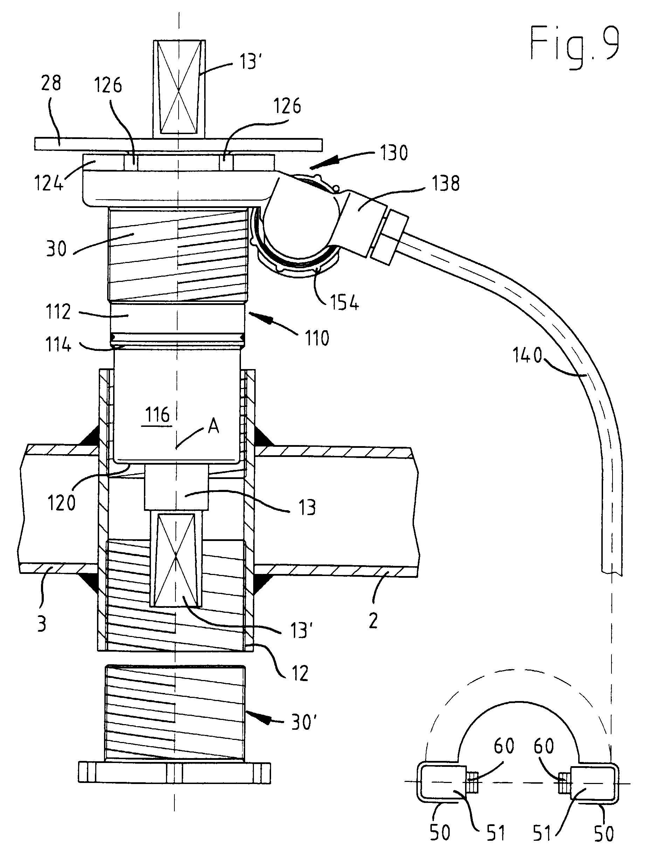

Fig.9 zeigt den unteren Knotenpunkt eines üblichen Fahrradrahmens mit den unteren Enden seines Sattelrohrs 2 und seines Unterrohrs 3, an die ein im folgenden kurz als Lagergehäuse 12 bezeichnetes Tretlagergehäuse üblicher Baurart angeschweißt oder durch Hartlöten befestigt ist. Durch das Lagergehäuse 12 erstreckt sich wie üblich längs dessen Achse A eine Kurbelwelle 13, an deren Enden 13' nicht dargestellte Tretkurbeln in ebenfalls üblicher Weise zu befestigen sind.

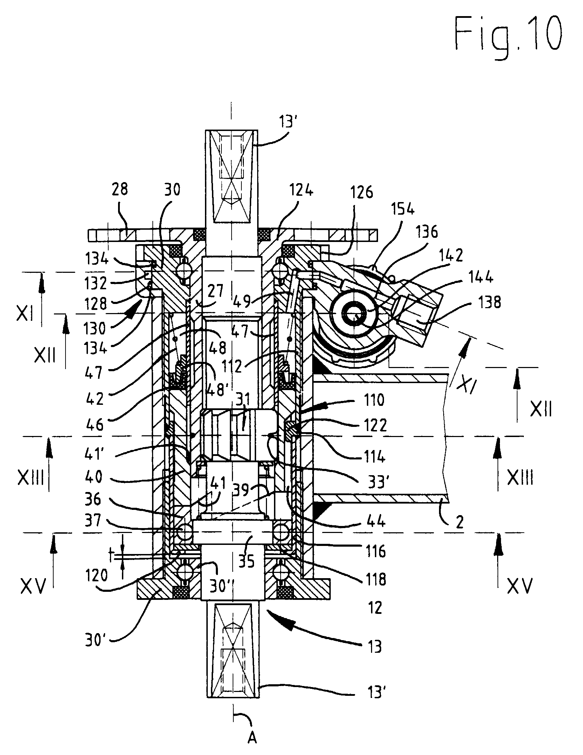

Die Kurbelwelle 13 ist in ihrem bezogen auf die Fahrtrichtung des Fahrrades rechten, in Fig.9 und 10 oberen Bereich in einer rohrförmigen Nabe 27 gelagert, die einen Flansch 28 zum Befestigen eines Kettenrades oder eines Satzes Kettenräder aufweist und in einem in das Lagergehäuse 12 eingeschraubten ersten Lagerkörper 30 kugelgelagert ist. In das vom Flansch 28 abgewandte Ende des Lagergehäuses 12 ist ein zweiter Lagerkörper 30' eingeschraubt, in dem ein mit Schiebesitz auf die Kurbelwelle 13 aufgeschobener Schiebering 30'' ebenfalls kugelgelagert ist.

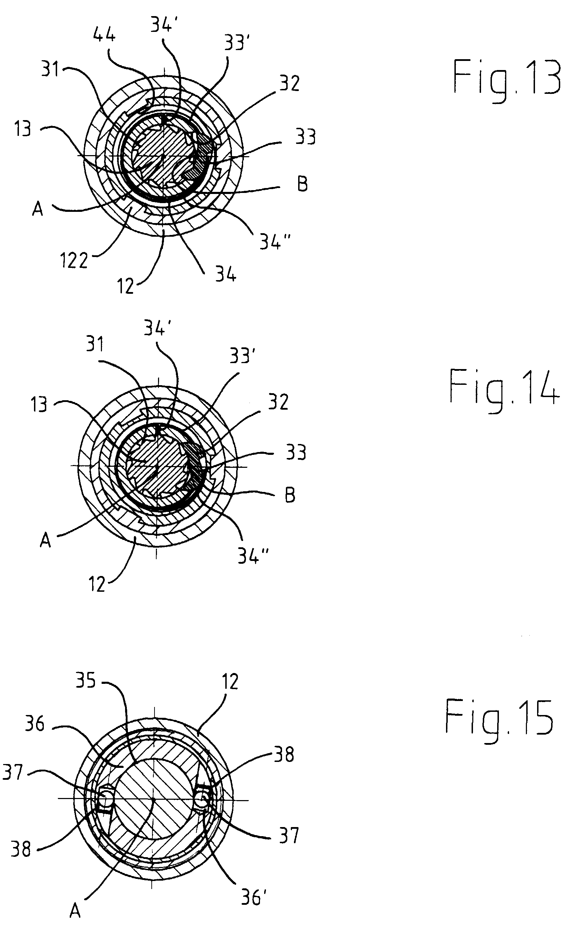

In ihrem von der Nabe 27 umschlossenen Bereich ist an der Kurbelwelle 13 eine Verzahnung 31 mit Sägezahnprofil ausgebildet, und in diesem Bereich weist die Nabe 27 eine im Querschnitt gemäß Fig.13 und 14 kreisförmige Aussparung 32 auf, in der eine Klinke 33 um eine Achse B schwenkbar gelagert ist. Die Achse B ist eine durch die kreisbogenförmige Begrenzung der Aussparung 32 definierte virtuelle Achse, die sich parallel zur gemeinsamen Achse A des Lagergehäuses 12, der Kurbelwelle 13 und der Nabe 27 erstreckt. Die Nabe 27 hat ferner eine äußere Ringnut 33', die sich in einer zu den Achsen A und B normalen Ebene durch die Aussparung 32 erstreckt, durch diese also unterbrochen ist. In der Ringnut 33' liegt eine entsprechend ringförmig gebogene Feder 34 aus Draht, die mit einem radialen Ende 34' in der Nabe 27 eingespannt ist und mit ihrem entgegengesetzten Ende 34'' derart gegen die Klinke 33 drückt, daß diese normalerweise gemäß Fig.13 in die Verzahnung 31 der Kurbelwelle 13 eingreift. Infolgedessen nimmt die Kurbelwelle 13, wenn sie vorwärts gedreht wird, die Nabe 27 mit, so daß das an ihr befestigte Kettenrad angetrieben wird.

Axial außerhalb der Nabe 27, gemäß Fig.10 unterhalb von ihr, jedoch noch innerhalb des Lagergehäuses 12, hat die Kurbelwelle 13 einen kreiszylindrischen Bereich 35 von verhältnismäßig großem Durchmesser, der von einem ringförmigen Freilaufelement 36 umschlossen ist. Dieses ist um die Achse A drehbar und weist zwei Bohrungen 36' auf, die einander diametral gegenüberliegend schräg zum kreiszylindrischen Bereich 35 der Kurbelwelle 13 angeordnet sind und je einen Sperrkörper 37 sowie je eine Feder 38 enthalten. Die Sperrkörper 37, im dargestellten Beispiel Kugeln, sind in ihrer Bohrung 36' so geführt und von der zugehörigen Feder 38 derart vorgespannt, daß sie bei stillstehendem Freilaufelement 36 eine unbehinderte Vorwärtsdrehung der Kurbelwelle 13 zulassen, daß aber das Freilaufelement 36 an jeglicher Rückwärtsdrehung der Kurbelwelle 13 teilnimmt. An der in bezug auf das Lagergehäuse 12 inneren, in Fig.10 oberen Stirnseite des Freilaufelements 36 ist eine ringförmige Axialkurve 39 ausgebildet, beispielsweise in Form dreier um 120° gegeneinander versetzt angeordneter Rampen, an die sich je eine radiale Flanke anschließt.

Axial neben dem Freilaufelement 36, in Fig.10 oberhalb davon, ist ein ebenfalls ringförmiger Hauptkolben 40 gleichachsig mit der Kurbelwelle 13 angeordnet, der an seiner dem Freilaufelement 36 zugewandten Stirnseite eine zu dessen Axialkurve 39 komplementäre Axialkurve 41 aufweist und axial derart vorgespannt ist, daß die beiden Axialkurven 39 und 41 ständig aneinanderliegen. In seinem Inneren weist der Hauptkolben 40 eine konische Steuerfläche 41' auf, die bei einer durch Rückwärtsdrehen des Freilaufelements 36 bewirkten Axialverschiebung des Hauptkolbens 40 gegen einen radial äußeren Rand der Klinke 33 drückt, diese aus der Verzahnung 31 ausrückt und sie solange ausgerückt hält, bis durch Vorwärtsdrehen der Kurbelwelle 13 das Freilaufelement 36 den Hauptkolben 40 in seine Ruhestellung gemäß Fig.10zurückfahren läßt. Die hierfür verantwortliche Vorspannung wird von einer Rückstellfeder 42 erzeugt, die am ersten Lagerkörper 30 axial abgestützt ist. Der Hauptkolben 40 weist drei achsparallele Nuten 44 auf, die um 120° gegeneinander versetzt sind und über die er gegen Drehen gesichert ist.

An seinem von der Axialkurve 39 abgewandten Ende trägt der Hauptkolben 40 eine Lippendichtung 46, die einerseits gegen einen zylindrischen Innenwandabschnitt des ersten Lagerkörpers 30 und andererseits gegen einen zylindrischen Außenwandabschnitt eines mit dem ersten Lagerkörper gleichachsigen, abdichtend an ihn angeschweißten hülsenförmigen Einsatzes 47 abdichtet und somit den Druckraum eines ringförmigen Hauptzylinders 48 begrenzt. Die Rückstellfeder 42 ist in dem ringfömigen Hauptzylinder 48 angeordnet und zwischen dem ersten Lagerkörper 30 und einem Stützring 48' eingespannt, der die Lippendichtung 46 am Hauptkolben 40 anliegend hält. An den Hauptzylinder 48 ist über einen im ersten Lagerkörper 30 ausgebildeten Kanal 49 ein Paar Radbremszylinder 50 angeschlossen, das zwei gegenläufig verschiebbare Radbremskolben 51 enthält. Jeder der Radbremskolben 51 trägt eine Bremsbacke 60.

Der erste Lagerkörper 30 ist Bestandteil einer im wesentlichen zylindrischen Kartusche 110, die einen Zylinderteil 112 des ersten Lagerkörpers 30, einen profilierten Zwischenring 114 und eine im Vergleich zum Zylinderteil 112 etwas schlankere Hülse 116 aufweist. Die Hülse 116 und der Zwischenring 114 sind durch Laserschweißungen abdichtend und starr am Zylinderteil 112 befestigt. Die so gestaltete Kartusche 110 umschließt den Hauptkolben 40, das Freilaufelement 36 sowie eine ringförmige Scheibe 118, die an der linken, in Fig.10 unteren Stirnfläche des Bereichs 35 der Kurbelwelle 13 sowie an der entsprechenden Stirnfläche des Freilaufelements im wesentlichen reibungsfrei anliegt und von einem radial nach innen umgebördelten Ende 120 der Hülse 116 gehalten wird. Auf diese Weise sind die genannten Bauteile mit der Kurbelwelle 13 und der Nabe 27 untrennbar zu einer Baugruppe vereint, die als Ganzes in das Lagergehäuse 12 einbaubar und aus ihm ausbaubar ist. Am Zwischenring 114 sind drei radial nach innen ragende Vorsprünge 122 ausgebildet, die in je eine der erwähnten achparallelen Nuten 44 des Hauptkolbens 40 eingreifen und diesen am Drehen hindern.

Der erste Lagerkörper 30 hat in einem axialen Abstand von der rechten, in Fig.9 und 10 oberen Stirnfläche des Lagergehäuses 12 einen Flansch 124 mit Ansatzflächen 126 für einen Schlüssel, beispielsweise Hakenschlüssel. Zwischen dem Flansch 124 und der ihm zugewandten Stirnfläche des Lagergehäuses 12 ist am ersten Lagerkörper 30 eine vorzugsweise geschliffene zylindrische Adapterfläche 128 ausgebildet, auf die ein ringförmiger Teil eines Konnektors 130 bis zum Anliegen am Flansch 124 aufgeschoben ist. Der ringförmige Teil des Konnektors 130 hat eine innere Ringnut 132; in diese mündet der Kanal 49, der vom Hauptzylinder 48 ausgeht und sich durch den Lagerkörper 30 hindurch bis zu dessen Adapterfläche 128 erstreckt. Beiderseits der Ringnut 132 sind in der Adapterfläche 128 bzw. im Konnektor 130 Ringdichtungen 134 angeordnet. Von der Ringnut 132 geht ein Anschlußkanal 136 aus, der sich durch den Konnektor 130 hindurch bis zu einem an diesem ausgebildeten Anschluß 138 erstreckt. Dieser Anschluß 138 ist im dargestellten Beispiel eine Gewindebohrung zum Anschließen einer üblichen hydraulischen Leitung 140, die zu den in Fig.9 angedeuteten Radbremszylindern 50 führt.

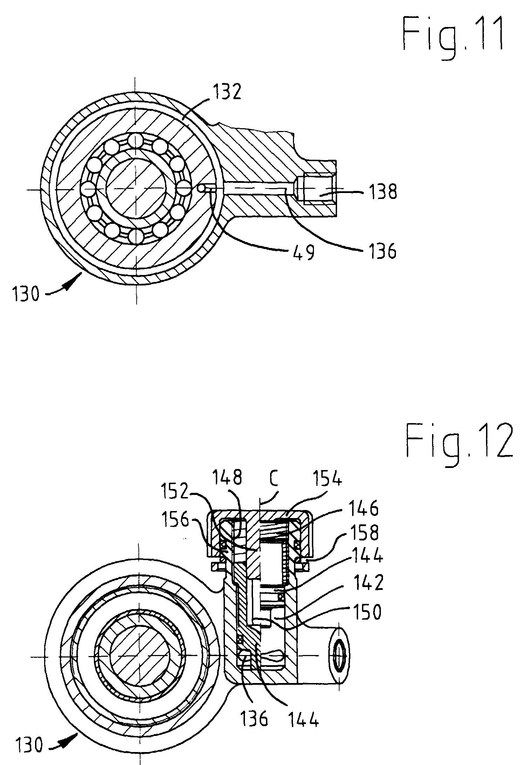

Der Konnektor 130 enthält eine Fluidkammer 142, deren Achse C die Achse A der Kurbelwelle 13 in einem Abstand rechtwinklig kreuzt. Die Fluidkammer 142 ist ständig mit dem Anschlußkanal 136 verbunden und enthält einen Verdrängerkolben 144, der mittels eines an ihm ausgebildeten Gewindekragens 146 in eine sich an die Fluidkammer 142 anschließende Gewindebohrung 148 des Konnektors 130 einstellbar eingeschraubt ist. Im Verdrängerkolben 144 ist ein nur am Gewindekragen 146 offener Innensechskant 150 ausgebildet, in den ein Sechkantzapfen 152 einer Einstellkappe 154 drehmomentübertragend, jedoch axial relativverschiebbar eingreift. Die Einstellkappe 154 ist auf einen die Gewindebohrung 148 enthaltenden rohrförmigen Stutzen 156 des Konnektors 130 abdichtend aufgesteckt, weist gemäß Fig.11 unterhalb dieses Stutzens 156 ein Paar Schlitze 158 auf und ist durch eine in diesen Schlitzen liegende, den Stutzen untergreifende Haltefeder 180 unverlierbar, jedoch drehbar festgehalten.

Die beschriebene Bremsbetätigungseinrichtung wird gemäß Fig.9 dadurch montiert, daß der Konnektor 130 mit seinem ringförmigen Teil auf die Adapterfläche 128 des Lagerkörpers 30 aufgesteckt und die gesamte Kartusche 110 dann in das Lagergehäuse 12 eingeschoben und der Lagerkörper 30 zunächst lose eingeschraubt wird. Sodann wird der Konnektor 130 in eine gewünschte Winkelstellung gebracht und der zweite Lagerkörper 30' wird in das entgegengesetzte Ende des Lagergehäuses 12 eingeschraubt, wobei der Schiebering 30'' auf die Kurbelwelle 13 aufgeschoben wird. Schließlich werden beide Lagerkörper 30 und 30' festgezogen. Der Konnektor 130 wird beim Festziehen des ersten Lagerkörpers 30 zwischen diesem und der ihm zugewandten Stirnfläche des Lagergehäuses 12 eingespannt und dadurch in seiner gewählten Winkelstellung sicher festgehalten. Beim Festziehen des zweiten Lagerkörpers 30' bleibt zwischen diesem und dem Ende 120 der Kartusche 110 ein Zwischenraum von der axialen Länge t zum Ausgleich von Längentoleranzen der beteiligten Baugruppen.

Der Konnektor 130 kann anstelle oder zusätzlich zu der Fluidkammer 142 mit dem Verdrängerkolben 144 eine oder mehrere Zusatzeinrichtungen enthalten oder damit verbunden sein. Beispiele solcher Zusatzeinrichtungen sind eine Dämpfungskammer, ein Vordruckventil, ein Bremsdruck-Regelventil, ein Druckhalteventil, ein Entlüftungsventil und ein hydraulisch betätigbarer Bremslichtschalter. Der dargestellte Konnektor 130 ist bei aus dem Lagergehäuse 12 ausgebautem ersten Lagerkörper 30 gegen einen Konnektor auswechselbar, der beliebig viele solche Zusatzeinrichtungen enthält oder Anschlüsse für solche Zusatzeinrichtungen aufweist.

## Patentansprüche

1. Bremsbetätigungseinrichtung für ein muskelkraftbetriebenes Fahrzeug mit
- einem Lagergehäuse (12), in dem eine Kurbelwelle (13) zum Antreiben eines Rades (11) gelagert ist,
- einem Freilaufelement (36), das im Lagergehäuse (12) angeordnet ist und mit der Kurbelwelle (13) einen bei Rückwärtsdrehen sperrenden Freilauf bildet,
- einem hydraulischen Hauptzylinder (48) der innerhalb des Lagergehäuses (12) angeordnet ist, mit einem Hauptkolben (40), der durch Rückwärtsdrehen des Freilaufelements (36) betätigbar ist, und
- mindestens einem Radbremszylinder (50), der an den Hauptzylinder (48) angeschlossen ist,
dadurch gekennzeichnet, daß
- im Lagergehäuse (12) eine zum Befestigen eines Kettenrades (15) ausgebildete Nabe (27) in bezug auf die Kurbelwelle (13) rückwärts drehbar gelagert ist,
- die Kurbelwelle (13) mit der Nabe (27) durch ein beim Vorwärtsdrehen sperrendes Richtungsgesperre (31,32,33,34) verbunden ist, und
- der Hauptkolben (40) eine Steuerfläche (41') aufweist, die beim Betätigen des Hauptkolbens (40) das Richtungsgesperre (31,32,33,34) selbsttätig ausrückt.

2. Bremsbetätigungseinrichtung nach Anspruch 1,
dadurch gekennzeichnet, daß der Hauptzylinder (48) und der Hauptkolben (40) ringförmig gestaltet und gleichachsig mit der Kurbelwelle (13) im Lagergehäuse (12) angeordnet sind,
- das Freilaufelement (36) eine als Axialkurve (39) ausgebildete ringförmige Stirnfläche aufweist und
- der Hauptkolben (40) eine als komplementäre Axialkurve (41) ausgebildete ringförmige Stirnfläche aufweist, gegen Drehen gesichert und von einer Rückstellfeder (42) im Sinne eines gegenseitigen Anliegens der beiden Axialkurven (39,41) vorgespannt ist.

3. Bremsbetätigungseinrichtung nach Anspruch 1 oder 2, dadurch gekennzeichnet, daß gleichachsig mit dem Hauptzylinder (48) eine an einen Bremsflüssigkeitsbehälter (65) anschließbare Nachlaufkammer (43) ebenfalls innerhalb des Lagergehäuses (12) angeordnet ist.

4. Bremsbetätigungseinrichtung für ein muskelkraftbetriebenes Fahrzeug mit
- einem Lagergehäuse, in dem ein erster und ein zweiter Lagerkörper (30, 30') befestigt sind,
- einer Kurbelwelle (13), die in den beiden Lagerkörpern (30, 30') gelagert und bei Vorwärtsdrehen zum Antreiben eines Rades, bei Rückwärtsdrehen hingegen zum Bremsen vorgesehen ist,
- einem Freilaufelement (36), das im Lagergehäuse (12) angeordnet ist und mit der Kurbelwelle (13) einen bei Rückwärtsdrehen sperrenden Freilauf bildet,
- einem ringförmigen hydraulischen Hauptzylinder (48), der innerhalb des Lagergehäuses (12) gleichachsig mit ihm angeordnet ist und einen durch Rückwärtsdrehen des Freilaufelements (36) betätigbaren Hauptkolben (40) enthält, und
- einem Kanal (49), über den mindestens ein Radbremszylinder (50) an den Hauptzylinder (48) anschließbar ist, wobei
- der erste Lagerkörper (30) eine Begrenzung des Hauptzylinders (48) bildet und eine außerhalb des Lagergehäuses (12) angeordnete Adapterfläche (128) aufweist,
- der Kanal (49) sich vom Hauptzylinder (48) innerhalb des ersten Lagerkörpers (30) bis zu dessen Adapterfläche (128) erstreckt, und
- an dem ersten Lagerkörper (30), gegen die Adapterfläche (128) abdichtend, ein außerhalb des Lagergehäuses (12) angeordneter Konnektor (130) befestigt ist, der einen Anschluß (138) für Radbremszylinder (50) und einen diesen Anschluß (138) mit dem Kanal (49) des Lagerkörpers (30) verbindenden Anschlußkanal (136) enthält.

5. Bremsbetätigungseinrichtung nach Anspruch 4,
dadurch gekennzeichnet, daß der erste Lagerkörper (30) zugleich eine radial innere Begrenzung (Einsatz 47) und eine radial äußere Begrenzung (Zylinderteil 112) des Hauptzylinders (48) bildet.

6. Bremsbetätigungseinrichtung nach Anspruch 5,
dadurch gekennzeichnet, daß der erste Lagerkörper (30) mit der radial äußeren Begrenzung (Zylinderteil 112) des Hauptzylinders (48) und einer daran dicht befestigten Hülse (116) eine als Ganzes auswechselbare Kartusche (110) bildet, die den Hauptkolben (40) und Hauptzylinder (48), das Freilaufelement (36), ein Tretlager sowie ein Gesperre (Verzahnung 31, Klinke 33) enthält, das die Kurbelwelle (13) nur bei Vorwärtsdrehen drehmomentübertragend mit einer Nabe (27) zum Antreiben eines Kettenrades verbindet.

7. Bremsbetätigungseinrichtung nach Anspruch 6,
dadurch gekennzeichnet, daß
- das Lagergehäuse (12) ein herkömmliches Tretlagergehäuse eines Fahrrads ist, in das beide Lagerkörper (30, 30') eingeschraubt sind, und
- die Kurbelwelle (13) in bezug auf den ersten Lagerkörper (30) axial unverschiebbar, und im zweiten Lagerkörper (30') über einen Schiebering (30'') zum Ausgleich von Längentoleranzen (t) axial verschiebbar gelagert ist.

8. Bremsbetätigungseinrichtung nach einem der Ansprüche 4 bis 7,
dadurch gekennzeichnet, daß
- die Adapterfläche (128) eine mit der Kurbelwelle (13) gleichachsige Mantelfläche des ersten Lagerkörpers (30) ist, die axial nach außen durch einen Flansch (124) dieses Lagerkörpers (30) begrenzt ist, und
- der Konnektor (130) die Adapterfläche (128) ringförmig umschließt und zwischen dem Flansch (124) und dem Lagergehäuse (12) axial eingespannt ist.

9. Bremsbetätigungseinrichtung nach einem der Ansprüche 4 bis 8, dadurch gekennzeichnet, daß
- der Konnektor (130) eine Fluidkammer (142) enthält, die mit dem Anschlußkanal (136) verbunden und durch einen einstellbaren Verdrängerkolben (144) begrenzt ist, und
- der Hauptzylinder (48) ohne Nachlaufkammer als Bestandteil eines abgeschlossenen hydraulischen Systems ausgebildet ist.

10. Bremsbetätigungseinrichtung nach Anspruch 9,
dadurch gekennzeichnet, daß der Verdrängerkolben (144) zum Einstellen in Gewindeverbindung mit dem Konnektor (130) und in drehmomentübertragender, axial verschiebbarer Verbindung mit einer am Konnektor (130) abdichtend gelagerten Einstellkappe (154) steht.

11. Bremsbetätigungseinrichtung nach einem der Ansprüche 4 bis 10,
dadurch gekennzeichnet, daß der Konnektor (130) mindestens eine mit dem Anschlußkanal (136) verbundene Zusatzeinrichtung wie Dämpfungskammer, Vordruckventil, Bremsdruck-Regelventil, Druckhalteventil, Entlüftungsventil und/oder einen Bremslichtschalter enthält.

12. Bremsbetätigungseinrichtung nach Anspruch 11,
dadurch gelennzeichnet, daß der Konnektor (130) bei aus dem Lagergehäuse (12) ausgebautem ersten Lagerkörper (30) auswechselbar ist.
